# EUROPÄISCHE PATENTSCHRIFT

(11) **EP 1 728 191 B1**
(45) Veröffentlichungstag und Bekanntmachung des Hinweises auf die Patenterteilung: **05.09.2007**
(21) Anmeldenummer: 05728286.5
(22) Anmeldetag: 23.03.2005
(51) Int. Cl.: G06K 7/00

(54) **VERFAHREN ZUR DATENKOMMUNIKATION ZWISCHEN EINER BASISSTATION UND EINEM TRANSPONDER**
METHOD FOR DATACOMMUNICATION BETWEEN A BASE STATION AND A TRANSPONDER
PROCEDE POUR COMMUNIQUER DES DONNEES ENTRE UNE STATION DE BASE ET UN TRANSPONDEUR

(30) Priorität: 25.03.2004 DE 102004014643; 14.04.2004 DE 102004018555
(43) Veröffentlichungstag der Anmeldung: 06.12.2006
(73) Patentinhaber: ATMEL Germany GmbH, 74072 Heilbronn (DE)
(72) Erfinder: FRIEDRICH, Ulrich, 74248 Ellhofen (DE)
(86) Internationale Anmeldenummer: PCT/EP2005/003088
(87) Internationale Veröffentlichungsnummer: WO 2005/093635

(56) Entgegenhaltungen:
- EP-B- 1 037 753
- DE-A1- 10 138 217
- US-A- 5 651 116

## Beschreibung

Die Erfindung betrifft ein Verfahren der im Oberbegriff des Patentanspruchs 1 genannten Art, also ein Verfahren zur Datenkommunikation zwischen einer Basisstation und zumindest einem Transponder mittels eines hochfrequenten elektromagnetischen Trägersignals, auf welchem Informationspakete aufmoduliert sind, wobei jeweils ein Informationspaket einen Kopfabschnitt, einen Mittelabschnitt und einen Endabschnitt aufweist und wobei der Mittelabschnitt ein Datenfeld zum Übertragung von Daten und/oder Adressinformationen und ein danach angeordnetes Sicherungsfeld zur Korrektur von Fehlern bei der Übertragung der Daten und/oder Adressinformationen aufweist. Die Erfindung betrifft ferner eine Basisstation zur Durchführung dieses Verfahrens sowie ein Datenkommunikationssystem enthaltend eine Basisstation und zumindest ein mit dieser in kommunikativer drahtloser Verbindung stehender Transponder.

Die Erfindung liegt auf dem Gebiet der Transpondertechnologie und insbesondere im Bereich der kontaktlosen Kommunikation zum Zwecke der Identifikation. Wenngleich prinzipiell auf beliebige Kommunikationssysteme an wendbar, werden die vorliegende Erfindung sowie die ihr zugrunde liegende Problematik nachfolgend in Bezug auf so genannte RFID-Kommunikationssysteme und deren Anwendungen erläutert. RFID steht dabei für "Radio Frequency Identification". Zum allgemeinen Hintergrund dieser RFID-Technologie wird auf das "RFID-Handbuch" von Klaus Finkenzeller, Hanser Verlag, dritte aktualisierte Auflage, 2002 verwiesen.

Bei Transpondern wird ein von einer Basisstation ausgesendetes elektromagnetisches Signal von dem Transponder aufgenommen und demoduliert. Man Unterscheidet hier aktive, semipassive und passive Transponder, je nach dem wie deren Energieversorgung ausgebildet ist. Im Unterschied zu aktiven Transpondern weisen passive Transponder keine eigene Energieversorgung auf, so dass die im Transponder für die Demodulation und Dekodierung des empfangenen elektromagnetischen Signals benötigte Energie aus eben diesem, von der Basisstation gesendeten elektromagnetischen Signal selbst entnommen werden muss. Neben dieser unidirektionalen Energieübertragung erfolgt typischerweise auch eine bidirektionale Datenkommunikation zwischen Basisstation und Transponder.

Eine bidirektionale Datenkommunikation zwischen Basisstation und Transponder besteht im Allgemeinen aus einer Anfragesequenz und einer Antwortsequenz.

Grundlage der bidirektionalen Datenübertragung zwischen Basisstation und Transponder bildet dabei ein so genanntes Kommunikationsprotokoll, das neben den zu übertragenden Dateninformationen auch Steuerinformationen für die Datenkommunikation festlegt.

Ein bekanntes RFID-Kommunikationsprotokoll für eine bekannte Datenkommunikation zwischen Basisstation und Transponder ist in der Deutschen Offenlegungsschrift DE 101 38 217 A1 beschrieben. Demnach weist ein von der Basisstation zu einem Transponder zu übertragendes Informationspaket zumindest einen Kopfabschnitt, einen Mittelabschnitt sowie einen Endabschnitt auf. Über den Kopfabschnitt wird die Anzahl der zu übertragenden Daten und deren Kennung definiert. Der Mittelabschnitt enthält die jeweils zu übertragenden Daten. Im Endabschnitt wird dem Empfänger der jeweils gesendeten Daten das Ende des Informationspaketes mitgeteilt. Abgesichert wird die Datenkommunikation mit Sicherungsmechanismen wie zum Beispiel einem CRC-Sicherungsfeld oder Parity-Bits.

Ein gattungsgemäße RFID-Verfahren und System zur bidirektionalen Datenkommunikation ist auch Gegenstand des so genannten Palomar-Projekts, welches von der Europäischen Kommission im Rahmen des so genannten IST-Programms gegründet wurde. Hinsichtlich des Inhalts dieses Palomar-Projekts wird auf die diesbezügliche, allgemein zugänglich Veröffentlichung der Europäischen Kommission vom 11.01.2002, die im Wesentlichen der ISO-Norm 18000-6 entspricht, verwiesen.

Zum weiteren Hintergrund der bidirektionalen Datenkommunikation zwischen Basisstation und Transponder sei noch auf die Deutschen Offenlegungsschriften DE 102 04 317 A1, DE 100 50 878 A1, DE 102 04 346 A1 und die Europäische Patentschrift EP 473 569 B1 verwiesen.

Im Allgemeinen werden Verfahren zur Datenkommunikation zwischen einer Basisstation und einem Transponder dazu verwendet, um innerhalb eines so genannten Authentifizierungsprozesses eine Identifikation beispielsweise unter Verwendung der RFID-Technologie durchzuführen. Damit bei dieser Datenkommunikation die jeweiligen Kommunikationsteilnehmer möglichst keine Verzögerung bemerken, muss die Datenkommunikation typischerweise innerhalb einer zeitlich beschränkten Zeitspanne von etwa 100 ms abgeschlossen sein. Diese vorgegebene Zeitspanne ergibt sich insbesondere aus einschlägigen HF-Vorschriften sowie der Tatsache, dass sich häufig die Transponder im Feld des von der Basisstation ausgesendeten Trägersignals bewegen. Es kommt hier aufgrund von Reflektionen immer wieder zu Feld auslöschungen, so dass die Datenkommunikation zwischen Basisstation und Transponder zwischen solchen Feldauslöschungen abgeschlossen werden sollte, um eine ordnungsgemäße Datenkommunikation zu gewährleisten. Wird innerhalb dieser häufig fest vorgegebenen Zeitspanne der Authentifizierungsprozess nicht abgeschlossen, dann ist eine eindeutige Identifikation meist nicht möglich, so dass der jeweilige Authentifizierungsprozess nochmals durchgeführt werden muss. Dies geht allerdings mit einer Zeitverzögerung einher.

Ein weiterer Aspekt besteht darin, dass aufgrund der steigenden Sicherheitsanforderungen in immer kürzerer Zeit eine Vielzahl von Daten mittels einer modulierten Trägerwelle übertragen werden muss. Für die Modulation wird im Vorwärts- und Rückwärtslink sehr häufig eine Amplitudenmodulation (ASK) verwendet. Im Vorwärtslink werden insbesondere bei passiven RFID-Systemen typischerweise keine Phasenmodulation (PSK) oder Frequenzmodulation (FSK) eingesetzt, da in diesem Fall eine Mischerschaltung im Transponder erforderlich wäre, um zum Beispiel eine Phasenänderung zu erkennen. Eine solche Mischerschaltung braucht allerdings außerordentlich viel Strom, der insbesondere bei passiven Transpondern, die lediglich über eine lokale Energieversorgung aufweisen, sehr häufig nicht zur Verfügung steht. Im Rückwärtslink wird neben der Amplitudenmodulation zunehmend auch eine Phasenmodulation für die Datenübertragung verwendet. Um eine höhere Datenrate und damit eine höhere Reichweite zu erzielen, werden für die Datenkommunikation hochfrequente Trägerfrequenzen im Bereich von der UHF-Frequenz oder Mikrowelle eingesetzt.

Die Dauer einer bidirektionalen Datenkommunikation zwischen Basisstation und zumindest einem Transponder, die bei RFID-Systemen ein wesentlicher Parameter darstellt, hängt unter anderem von den folgenden Parametern ab:
- der Anzahl der für eine Datenkommunikation erforderlichen Informationspakete;
- der Anzahl der pro Informationspakete übertragenen Daten und damit die Bitbreite eines Informationspakets;
- der Art der Datenübertragung (Vollduplex, Halbduplex);
- der Beschaffenheit des elektromagnetischen Feldes der Trägerwelle sowie dessen Umgebung (elektromagnetische Störfelder).

Aufgrund der obigen Parameter sowie der Tatsache, dass sich der Transponder bisweilen im elektromagnetischen Feld der Trägerwelle relativ zu diesem bewegt, ist die maximale Dauer einer Datenkommunikation, die für eine vollständige Übermittlung der Daten zwischen Basisstation und Transponder zur Verfügung steht, physikalisch begrenzt. Insbesondere sind die Zeiten für diese Datenkommunikation in erheblichem Maße auch von der jeweils gewünschten Applikation abhängig.

Ohne das Bereitstellen weiterer Maßnahmen muss derzeit im Vorwärtslink und im Anschluss daran auch im Rückwärtslink jeweils ein vollständiges Informationspaket übertragen werden, auch dann, wenn eine Datenkommunikation im Vorwärtslink und/oder im Rückwärtslink beispielsweise durch Überlagerung von Störsignalen fehlerhaft ist. Vor allem für zeitlich sehr lange, viele Symbole aufweisende Informationspakete ist dies unter Umständen nachteilig, da hier auch für den Fall, dass eine Datenkommunikation für ein Informationspaket bereits als fehlerhaft erkannt wurde, dieses bis zum Ende der jeweiligen Datenkommunikation fortgesetzt werden muss.

Bisher verwendete UHF- und Mikrowellentransponder verwenden für die Datenkommunikation asynchrone Kommunikationsverfahren, bei denen kein Systemtakt mit der Trägerwelle übertragen wird. Diese Kommunikationssysteme konnten daher lediglich im Halbduplexverfahren betrieben werden. Moderne Kommunikationssysteme arbeiten synchron, das heißt, die Basisstation und der mit dieser Basisstation zumindest eine in kommunikativer Verbindung stehende Transponder arbeiten mit demselben Systemtakt. Dies eröffnet neue Möglichkeiten in der Datenkommunikation zwischen Basissta tion und Transponder. Insbesondere können diese nunmehr nach einem Einsynchronisieren im Vollduplexverfahren betrieben werden, was eine erhebliche Verkürzung der Dauer der Datenkommunikation bewirkt. Dabei besteht der Bedarf, die Anzahl der Notches möglichst zu reduzieren, da diese ein unerwünschtes Spektrum erzeugen. Insbesondere können durch die Notches unerwünschterweise Störsignale generiert werden, die sehr schwach ausgebildete Seitenbänder beeinflussen können, was insbesondere für die Datenrückübertragung im Rückwärtslink von Nachteil ist. Diese Störsignale können bisweilen das RFID-Kommunikationssystem soweit stören, dass eine Demodulierung und damit Dekodierung nicht mehr möglich ist bzw. nur mit hohem Rechenaufwand zu ermitteln ist. Bisweilen ist die empfangene Leistung dieser empfangenen Störsignale so groß, dass dadurch Blockaden des RFID-Kommunikationssystems hervorgerufen werden können. Um dies zu verhindern, darf die Datenkommunikation nur in solchen Zeitschlitzen aktiviert werden, bei denen die übrigen störenden Sendesysteme gerade nicht oder nur geringe Störsignale aussenden. In sehr störungsreicher Umgebung müssen diese Zeitschlitze zeitlich derart limitiert sein, dass das RFID-Kommunikationssystem für eine hohe Leistungsfähigkeit in der Lage sein muss, möglichst kurze Kommunikationszeiten zu unterstützen.

Bei bestehenden RFID-Kommunikationssystemen trifft dies allerdings nicht zu. Dies liegt daran, dass die Struktur der entsprechenden RFID-Kommunikationsprotokolle einschließlich deren Sicherungsebene, typischerweise fest vorgegeben ist. Insbesondere ist die Bitbreite und damit die Dauer eines Informationspakets innerhalb einer Applikation fest vorgegeben und lässt sich daher nicht mehr verändern. Im Falle einer störungsreichen Umgebung ist damit eine Datenkommunikation zwischen Basisstation und Transponder insbesondere für sehr lange Informationspakete und damit für eine sehr große Menge zu übertragender Daten pro Informationspaket kaum mehr oder nur durch Inkaufnehmen einer mehr oder weniger stark gestörten Datenkommunikation möglich, da es während der Dauer eines Informationspakets nahezu unmöglich ist, sämtliche Symbole störungsfrei zu übertragen.

Ein weiteres physikalisches Problem bei der Datenkommunikation unter Verwendung von UHF- oder Mikrowellensignalen besteht in dem Vorhandensein so genannter "Nulls". Diese "Nulls" entstehend durch konstruktive und destruktive Überlagerung der von der Basisstation gesendeten Trägersignale durch Reflexion an Gegenständen in der Umgebung der Basisstation. Dadurch kann es zu Auslöschungen von Teilen des gesendeten Signals kommen, was letztendlich ebenfalls einer störungsfreien Datenübertragung entgegensteht. Aufgrund dieses Interferenzphänomens ist aber eine RFID-Datenkommunikation nicht mehr oder nur eingeschränkt möglich, da für den Transponder in den genannten Fällen keine Energie mehr zur Verfügung steht. Diese Energie benötigt der Transponder aber für eine Datenrückübertragung im Rahmen eines Backscatter-Verfahrens. Auch hier sind RFID-Kommunikationssysteme und Verfahren zur RFID-Datenkommunikation erforderlich, die in der Lage sind, die für die Datenkommunikation zwischen Basisstation und Transponder erforderliche Zeit möglichst kurz zu halten.

Ein weiteres Problem bei bestehenden RFID-Kommunikationssystemen, die im UHF- oder Mikrowellenbereich betrieben werden, besteht darin, dass die Geschwindigkeit der Datenübertragung durch nationale oder überregionale HF-Bestimmungen teilweise drastisch begrenzt ist. Insbesondere sehen nationale Vorschriften für den Geltungsbereich der Bundesrepublik Deutschland wie auch regionale Bestimmungen im Geltungsbereich der Europäischen Union vor, dass die maximale Sendeleistung einer elektromagnetischen Trägerwelle beim Betrieb eines RFID-Systems und auch die entsprechende Trägerfrequenz auf ein solches Maß begrenzt sein sollen, dass dadurch zum einen andere Funksysteme nicht beeinträchtigt werden und zum anderen die gesundheitsrelevanten Grenzwerte nicht beeinträchtigt werden. Zudem werden RFID-Systeme in Europa mit einem solchen Taktzyklus (engl.: duty cycle) betrieben, der maximal etwa 10 % der Zeit entspricht, in dem das Frequenzband belegt sein darf. Anschließend muss die Basisstation 90 % der Zeit warten, was dazu führt, das Datenkommunikationsprotokolle möglichst kurz sein sollten, um eine effektive, möglichst hohe Datenrate zu gewährleisten. Daher besteht auch hier der Bedarf nach kürzeren Zeiten für die Datenkommunikation zwischen Basisstation und Transponder.

Vor diesem Hintergrund liegt der vorliegenden Erfindung nun die Aufgabe zugrunde, die Zeiten für eine Datenkommunikation zu verkürzen. Eine weitere Aufgabe der vorliegenden Erfindung besteht darin, die Dauer einer Datenkommunikation flexibler zu gestalten. Schließlich besteht eine weitere Aufgabe der Erfindung darin, die im Rahmen des Backscatter-Verfahrens gewonnenen Erkenntnisse zu verwerten.

Erfindungsgemäß wird zumindest eine dieser Aufgaben durch ein Verfahren zur Datenkommunikation mit den Merkmalen des Patentanspruchs 1, durch eine Basisstation mit den Merkmalen des Patentanspruchs 20, durch ein Datenkommunikationssystem mit den Merkmalen des Patentanspruchs 22 sowie durch eine Verwendung mit den Merkmalen des Patentanspruchs 24 gelöst. Demgemäß ist vorgesehen:
- Ein Verfahren zur Datenkommunikation zwischen einer Basisstation und zumindest einem Transponder mittels eines hochfrequenten elektromagnetischen Trägersignals, auf welchem Informationspakete aufmoduliert sind, wobei jeweils ein Informationspaket einen Kopfabschnitt, einen Mittelabschnitt und einen Endabschnitt aufweist und wobei der Mittelabschnitt ein Datenfeld zum Übertragung von Daten und/oder Adressinformationen und ein danach angeordnetes Sicherungsfeld zur Korrektur von Fehlern bei der Übertragung der Daten und/oder Adressinformationen aufweist, wobei von der Basisstation zumindest ein Steuerfeld nach dem Datenfeld eingefügt wird, über welches das dem eingefügten Steuerfeld sich anschließende Sicherungsfeld derart veränderbar ist, dass die Dauer eines Informationspakets variabel eingestellt wird. (Patentanspruch 1)
- Eine Basisstation zur Datenkommunikation mit zumindest einem Transponder, mit einer Sende-/Empfangseinrichtung zum Senden hochfrequenter Trägersignale und zum Empfangen entsprechender Antwortsignale eines Transponders, mit einer mit der Sende-/Empfangseinrichtung gekoppelten Auswerteeinrichtung, welche die gesendeten und die entsprechend zugehörigen von einem Transponder zurückübertragenen Antwortsignale miteinander vergleicht und auswertet, mit einer mit der Auswerteeinrichtung gekoppelten Steuereinrichtung, die abhängig von der Auswertung in der Auswerteeinrichtung die weitere Datenkommunikation mit zumindest einem Transponder steuert. (Patentanspruch 20)
- Ein Datenkommunikationssystem, insbesondere ein RFID-Datenkommunikationssystem, mit einer erfindungsgemäßen Basisstation, mit zumindest einem Transponder, der unter Verwendung eines erfindungsgemäßen Verfahrens mit der Basisstation in kommunikativer Verbindung steht, der von der Basisstation mit Energie versorgt wird und der im Rückwärtslink im Vollduplexbetrieb zu der Basisstation betreibbar ist. (Patentanspruch 22)
- Verwendung eines Transponders eines Datenkommunikationssystems als Sensor, insbesondere als Temperatursensor und/oder als Drucksensor. (Patentanspruch 24)

Der Erfindung liegt die Erkenntnis zugrunde, dass es im Rückwärtslink möglich ist, das Protokoll der Datenkommunikation an jeder beliebigen Stelle abzubrechen. Hingegen war die Möglichkeit eines Abbruchs der Datenkommunikation im Vorwärtslink bislang nicht möglich.

Die der vorliegenden Erfindung zugrunde liegende Idee besteht nun darin, ein zusätzliches Steuerfeld unmittelbar nach dem Datenfeld und/oder im nachfolgenden Sicherungsfeld einzufügen. Mittels dieses zusätzlichen Steuerfeldes ist es möglich, eine festvorgegebene Sicherungsebene für die Datenkommunikation im Vorwärtslink durch eine adaptive veränderbare Sicherungsebene zu ersetzen. Dieses Steuerfeld ermöglicht es, das Protokoll der Datenkommunikation im Vorwärtsfeld an jeder beliebigen Stelle abzubrechen, beispielsweise nach dem Empfang einer vorgegebenen Anzahl richtig erkannter oder eines oder mehrerer fehlerhaft erkannter Bits des Sicherungsfeldes.

Durch diese Sicherungsebene lässt sich eine variable Datenkommunikation derart bereitstellen, dass die Länge und damit die Dauer eines jeweiligen Informationspakets, welches von der Basisstation zu dem Transponder übertragen wird, in einem bestimmten Bereich variabel eingestellt werden kann. Die Variabilität der Dauer eines übertragenen Informationspakets ergibt sich insbesondere dadurch, dass abhängig vom Inhalt des Steuerfeldes, der gewünschten Applikation und/oder der Qualität der Datenübertragung jeweils einzelne oder alle Sicherungsbits innerhalb des Sicherungsfeldes im Vorwärtslink nicht übertragen werden. Es erfolgt hier gewissermaßen ein vorzeitiger Abbruch des Sicherungsfeldes.

### Die Vorteile des erfindungsgemäßen Verfahrens liegen hier auf der Hand:

Zum einen lassen sich damit adaptive Protokolle für die Datenkommunikation bereitstellen, die neben dem üblicherweise vorhandenen Sicherungsfeld eine zusätzliche Sicherungsebene im Vorwärtslink aufweisen. Eine derartige, zusätzliche Absicherung der Datenkommunikation im Vorwärtslink war bei bisher bekannten, gattungsgemäßen RFID-Kommunikationssystemen und -verfahren nicht vorgesehen.

Zum anderen lässt sich auf diese Weise die Datenkommunikation signifikant abkürzen. Besonders vorteilhaft ist dies in solchen Fällen, bei denen die Datenübertragung zum Beispiel kurzzeitig nicht oder nur unwesentlich ge stört wird. Hier kann vorgesehen sein, dass beispielsweise auf das Sicherungsfeld ganz verzichtet wird, da hier von einer ordnungsgemäßen, fehlerfreien Datenüberübertragung ausgegangen wird.

Darüber hinaus lässt sich die Übertragungsdauer eines Informationspakets vorteilhafterweise auch variabel in Abhängigkeit von den Umgebungsbedingungen dieser Datenkommunikation gestalten. Diese Umgebungsbedingungen beinhalten insbesondere die Sendeleistung, mit der die Daten übertragen werden, die Entfernung des Transponders zu der Basisstation, die Anzahl der mit der Basisstation kommunizierenden Transponder sowie insbesondere ein gegebenenfalls vorhandenes elektromagnetisches Störfeld, welches mit den zu übertragenden Datensignalen überlagert ist und damit die Datenkommunikation insbesondere negativ beeinflussen kann.

Vorteilhafte Ausgestaltungen und Weiterbildungen der Erfindung sind in den Unteransprüchen sowie in der Beschreibung unter Bezugnahme auf die Zeichnung entnehmbar.

In einer sehr vorteilhaften Ausgestaltung der Erfindung kann die Basisstation bereits im Vorwärtslink und damit bei der Übertragung der zu sendenden Datensignale den ordnungsgemäßen Empfang dieser Datensignale durch den Transponder überprüfen. Dies geschieht typischerweise durch die von dem Transponder auf die gesendeten Datensignale hin zurück übertragenen Antwortsignale. Die Rückübertragung erfolgt dabei zeitversetzt zu den entsprechend von der Basisstation gesendeten Signalen. Die Basisstation wertet vorteilhafterweise diese Antwortsignale aus und kann entsprechend dieser Auswertung, bei der die gesendeten und die entsprechenden Antwortsignale miteinander verglichen werden, darauf reagieren und die weitere Datenkommunikation entsprechend anpassen. Beispielsweise kann die Basisstation die Datenkommunikation sofort abbrechen, sofern sich aus der Auswertung ergibt, dass die bisher gesendeten Datensignale vom Transponder fehlerhaft empfangen wurden oder es innerhalb der Basisstation zu Fehlinterpretationen der empfangenen Antwortsignale gekommen ist.

Zusätzlich oder alternativ kann auch vorgesehen sein, dass die Basisstation im Falle einer ordnungsgemäß erkannten Datenkommunikation das Sicherungsfeld beziehungsweise zumindest Teile des Sicherungsfeldes überspringt. Diese Entscheidung kann beispielsweise auf der Erkenntnis beruhen, dass eine derartige Absicherung der Datenkommunikation nicht mehr als erforderlich erachtet wird, da aufgrund der Auswertung der Antwortsignale und der gesendeten Signale bereits auf eine hohe Qualität der Datenkommunikation geschlossen wird. Aufgrund dieser hohen Qualität der Datenkommunikation kann applikationsbedingt auf zumindest Teile des Sicherungsfeldes verzichtet werden. Auf das Sicherungsfeld beziehungsweise auf Teile des Sicherungsfeldes kann in einer zusätzlichen Ausgestaltung auch verzichtet werden, wenn beispielsweise von der Basisstation kein großer Wert auf eine hohe Qualität der Datenkommunikation gelegt wird. Dies spielt insbesondere bei kostengünstigen, so genannten "low cost" Basisstationen und Transpondern eine besondere Rolle. Diese weisen typischerweise eine eingeschränkte Funktionalität hinsichtlich der Datenkommunikation und insbesondere hinsichtlich der Auswertung der rückübertragenen Daten auf. Insbesondere bei solchen Basisstationen kann auch vorgesehen sein, dass keine bitweise Überprüfung und Auswertung der rückübertragenen Antwortsignale vorgenommen wird, sondern vielmehr jeweils die Antwortsignale feldweise oder gar nicht überprüft werden.

Diejenigen Basisstationen, die keine bitweise Überprüfung der zurückübertragenen Daten unterstützen, werden in einer vorteilhaften Ausgestaltung durch Einlesen einer Kette von über den Rückwärtslink rückübertragenen Antwortsignalen eingesetzt. Auf diese Weise ist in der Basisstation eine feldweise Überprüfung der Antwortsignale, die sich aus den im Vorwärtslink übertragenen Datensignalen ergeben, möglich.

In einer zusätzlichen, besonders vorteilhaften Ausgestaltung, kann die Übertragung von rückübertragenen Antwortsignalen auf ein Minimum beschränkt werden oder auch ganz unterlassen werden. Im ersteren Falle sendet die Basisstation unmittelbar nach dem Datenfeld beziehungsweise innerhalb des Sicherungsfeldes zumindest ein Steuersignal, welches als EOT-Sequenz ausgebildet ist. Bei Vorhandensein einer solchen EOT-Sequenz wird die Gesamtübertragungsdauer eines Informationspaketes signifikant verkürzt. Empfängt der Transponder diese EOT-Sequenz, dann wird dem Transponder signalisiert, dass die Übertragung des jeweiligen Informationspakets unmittelbar beendet werden soll.

Die Erfindung wird nachfolgend anhand der in den schematischen Figuren der Zeichnung angegebenen Ausführungsbeispielen näher erläutert. Es zeigen dabei:
- Figur 1: die grundsätzliche Struktur eines Informationspaketes für den Vorwärts- und/oder Rückwärtslink einer Datenkommunikation zwischen Basisstation und Transponder;
- Figur 2: die Struktur eines Informationspaketes im Falle eines langen Kommandos (A) und im Falle eines kurzen Kommandos (B);
- Figur 3: die Struktur eines Informationspaketes im Vorwärtslink einer Datenkommunikation im Falle eines erfindungsgemäßen Einfügens eines Steuerfeldes unmittelbar nach dem Datenfeld (A) und innerhalb des Sicherungsfeldes (B);
- Figur 4: mehrere Informationspakete im Vorwärtslink und Rückwärtslink zur Veranschaulichung des erfindungsgemäßen Verfahrens;
- Figur 5: verschiedene Abläufe einer Datenkommunikation nach einem erfindungsgemäßen Einfügen des Steuerfeldes im Vorwärtslink;
- Figur 6: anhand eines Blockschaltbildes den Aufbau eines RFID-Kommunikationssystems enthaltend eine Basisstation und zumindest einen Transponder zur Durchführung des erfindungsgemäßen Verfahrens.

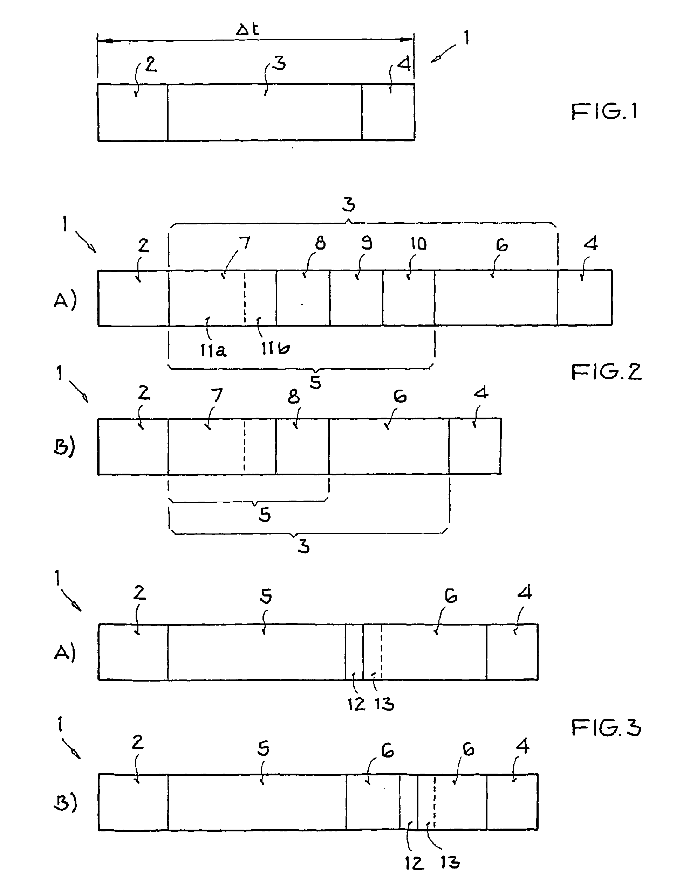

In den Figuren der Zeichnung sind gleiche beziehungsweise funktionsgleiche Elemente, Daten und Signale - sofern nichts anderes angegeben istmit denselben Bezugszeichen versehen worden. Ferner beziehen sich die Darstellungen in den Figuren 1 - 5 jeweils auf die zeitliche Abfolge einer jeweiligen Datenkommunikation bzw. der jeweiligen Felder eines Informationspakets.

Die Datenkommunikation zwischen der Basisstation und dem Transponder definiert einen Kanal, der nachfolgend auch als Vorwärtslink VL (engl: forward link oder downlink) bezeichnet wird. Umgekehrt bezeichnet die Datenkommunikation vom Transponder zurück zu der Basisstation einen Kanal, der allgemein als Rückwärtslink RL (engl: return link oder uplink) bezeichnet wird. Zusätzlich zu der Datenkommunikation im Rückwärtslink RL erfolgt bei so genannten auf Backscattering basierenden Transpondern auch eine Datenkommunikation zwischen Transponder und Basisstation (und gegebenenfalls auch umgekehrt), bei denen ein gesendetes Signal unter Verwendung des Rückstreuquerschnitts der Antenne des Empfängers zurück zum Sender gestreut wird. Dieses Verfahren ist allgemein auch als Backscatter-Verfahren bekannt. Diese Datenkommunikation unter Verwendung der Backscatter-Technik kann sowohl im Vorwärtslink als auch im Rückwärtslink eingesetzt werden.

Die Datenübertragung erfolgt mittels einer Amplituden-modulierten Trägerwelle, die basisstationsseitig ausgesendet wird und vom Transponder zurückgesendet wird. Die Daten werden durch Pulspausenmodulierung des Trägersignals erzeugt, indem der Sender der Basisstation für bestimmte Zeitspannen ein elektromagnetisches Feld für das Trägersignal einschaltet. Im Transponder wird so eingangsseitig ein von der Feldstärke des Trägersignals abgeleitetes Spannungssignal erzeugt, welches Spannungseinbrüche, die allgemein auch als "notch" bezeichnet werden, aufweist. Die Dateninformation liegt nun in der Zeitspanne zwischen zwei solcher Spannungseinbrüche. Diese Zeitspanne beinhaltet nun jeweils ein Datensymbol oder kurz ein Symbol. Die Feldlücke, bei der der Sender der Basisstation ausgeschaltet ist beziehungsweise kein elektromagnetisches Trägersignal sendet, bildet so gewissermaßen einen Separator zwischen zwei aufeinanderfolgenden Datensymbolen. Die Wertigkeit eines Datensymbols bestimmt sich aus der Zeitspanne, in der das elektromagnetische Feld eingeschaltet ist und somit das Trägersignal seine nominale Amplitude aufweist. Ein Symbol kann nun eine digitale Codierung ("0" oder "1") aufweisen oder zusätzlich noch weitere Informationen, wie nachfolgend erläutert wird, enthalten.

Figur 1 zeigt zunächst die grundsätzliche Struktur eines Informationspaketes 1, wie es für eine Datenkommunikation zwischen einer Basisstation und einem Transponder verwendet wird und wie es beispielsweise aus der eingangs genannten Offenlegungsschrift DE 101 38 217 A1 heraus bekannt ist. In Figur 1 sei angenommen, dass das Informationspaket 1 für die Datenkommunikation im Vorwärtslink VL des Datenkommunikationssystem ausgelegt ist, wenngleich ein auf dieses Informationspaket 1 hin im Rückwärtslink rückübertragenes Informationspaket eine ähnliche Struktur aufweisen kann.

Das Informationspaket 1 weist einen Kopfabschnitt 2, einen Mittelabschnitt 3 sowie einen Endabschnitt 4 auf.

In dem Kopfabschnitt 2 werden die Anzahl der zu übertragenden Datensymbole sowie deren Kennung definiert. Dies ist deshalb erforderlich, um feststellen zu können, an welcher genauen Position ein jeweiliges Feld innerhalb des Mittelabschnittes 3 beziehungsweise des Endabschnittes 4 beginnt. Diese Notwendigkeit ergibt sich aufgrund der Tatsache, dass die Dauer eines Informationspakets 1 im Allgemeinen und der einzelnen Felder 2 - 4 im Speziellen nicht, wie dies bei vielen zeitschlitzbasierten Datenübertragungsverfahren der Fall ist, fest vorgegeben und weitestgehend konstant ist. Vielmehr kann die Dauer und damit die innerhalb eines Informationspakets 1 übertragenen Informationen je nach Applikation mehr oder weniger stark variieren, wie nachfolgend anhand von Figur 2 noch ausführlich dargelegt wird. Mit der Kennung innerhalb des Kopfabschnitts 2 werden die zu übertragenden Daten im Mittelabschnitt 3 kodiert. Insbesondere gibt der Kopfabschnitt 2 Referenzzeiten vor, die für die weitere Datenübertragung im Mittelabschnitt 3 bzw. Datenfeld 5 verwendet werden. Über den Kopfabschnitt 2 wird auch die Geschwindigkeit der Datenkommunikation zwischen Basisstation und Transponder festgelegt, beispielsweise über die Frequenz eines freilaufenden Oszillators im Transponder. Zusätzlich lässt sich der Kopfabschnitt 2 auch zur Synchronisation des für die Datenkommunikation erforderlichen Datenprotokolls verwenden. Darüber hinaus können in einer sehr vorteilhaften Ausgestaltung im Kopfabschnitt 2 auch Steuerinformationen für die dem Kopfabschnitt 2 nachfolgenden Felder des Mittelabschnittes 3 und des Endabschnittes 4 enthalten sein.

Der Inhalt des Endabschnitts 4 zeigt dem jeweiligen Empfänger des gesendeten Informationspakets 1 das Ende desselben an. Im Falle des eingangs erwähnten Palomarsystems weist der Endabschnitt 4 genau zwei so genannte EOT-Symbole (EOT = End of Transmission) auf.

Im Mittelabschnitt 3 werden kodierte Datensymbole übertragen. Je nach der gewünschten Applikation können hier die unterschiedlichsten Datenstrukturen vorgesehen sein. Anhand der Figuren 2 sei dies anhand zweier unter schiedlicher Strukturen eines Informationspaketes 1 im Vorwärtslink VL beschrieben.

Der Mittelabschnitt 3 besteht allgemein aus einem Datenfeld 5 sowie einem diesem Datenfeld 5 unmittelbar nachgeschalteten Sicherungsfeld 6. Im Allgemeinen unterteilt man Informationspakete 1 in solche, die lange Kommandos und damit lange Adressen und solche, die kurze Kommandos und damit kurze Adressen (B) enthalten.

Figur 2(A) zeigt die Struktur eines Informationspakets 1 im Falle eines langen Kommandos. In diesem Falle enthält das Datenfeld 5 in zeitlicher Reihenfolge nacheinander ein Kommandofeld 7, ein Parameterfeld 8, ein Adressfeld 9 sowie ein Programmdatenfeld 10. Die Inhalt dieser Felder 7-10 hängt von der jeweils gewünschten Applikation und insbesondere von der Menge der über ein jeweiliges Informationspaket 1 zu übertragenden Datensymbole ab. In einer typischen Ausgestaltung weist das Kommandofeld 7 beispielsweise sechs Bit breite Kommandos 11a (Befehle) auf, denen zwei Sicherungsbits 11 b nachgeordnet sind. Die Trennung zwischen den Kommandobits 11a und den Sicherungsbits 11 b ist in Figur 2 gestrichelt angedeutet.

Bei einem Informationspaket 1, welches kurze Kommandos aufweist Figur 2(B), weist das Datenfeld 5 lediglich ein Kommandofeld 7 und ein danach angeordnetes Parameterfeld 8 auf.

Im vorliegenden Ausführungsbeispiel in Figur 2(A), (B) ist das dem Datenfeld nachgeordnete Sicherungsfeld 6 als so genanntes CRC-Sicherungsfeld (CRC = Cyclic Redunancy Check) ausgebildet. Die Bitbreite dieses CRC-Feldes 6 hängt insbesondere von der Bitbreite der zu übertragenden Daten im Datenfeld 5 und/oder von der jeweils vom Anwender eingestellten Applikation ab. Je nach Applikation kann daher ein CRC-Sicherungsfeld 6 vorgesehen sein, welches eine entsprechend der gewünschten Sicherheits-Redundanz mehr oder weniger große Bitbreite aufweist. Statt der Ausgestaltung als CRC-Sicherungsfeld 6 kann das Sicherungsfeld 6 auch mit so genannten Parity-Bits belegt sein.

Insbesondere bei der Datenkommunikation sicherheitsrelevanter Daten zwischen der Basisstation und dem Transponder kann daher ein sehr umfangreiches CRC-Sicherungsfeld 6 vorgesehen sein. Dieses CRC-Sicherungsfeld 6 kann abhängig von den Daten im Datenfeld 5 beispielsweise 16, 32 oder sogar 64 Bit aufweisen. Sehr häufig weist das CRC-Sicherungsfeld 6 eine der Anzahl der Bits im Datenfeld 5 entsprechende Anzahl von Sicherungsbits auf. Dies macht allerdings die Datenübertragung eines Informationspakets 1, bei dem sowohl die Datenbits im Datenfeld 5 als auch im CRC-Sicherungsfeld 6 übertragen werden müssen, außerordentlich zeitaufwändig, da selbst bei einer fehlerhaften Datenkommunikation dieses Sicherungsfeld 6 dennoch vollständig durchlaufen werden muss.

Es zeigt sich also, dass die Dauer Δt eines jeweiligen Informationspakets 1 mehr oder weniger stark von den zu übertragenden Datensymbolen, das heißt von den Kommandos, Parametern, Adressen, CRC-Sicherungsdaten, etc. abhängt. Ohne weitere Maßnahmen ist diese Dauer Δt eines Informationspakets 1 fest vorgegeben.

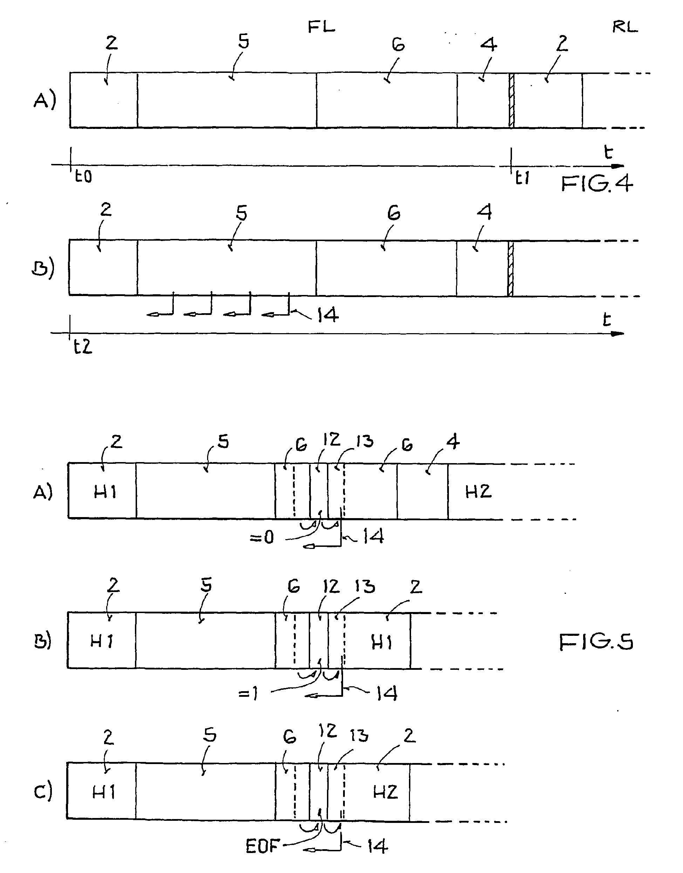

Figur 3 zeigt anhand einer schematischen Darstellung die Struktur eines Informationspakets im Vorwärtslink VL, bei dem die Länge dieses Informationspakets 1 innerhalb gewisser Grenzen variabel einstellbar ist.

Die vorliegende Erfindung sieht vor, dass unmittelbar nach dem Datenfeld 5 (Figur 3(A)) ein Steuerfeld 12 in die Struktur des Informationspakets 1 einfügbar ist. Dieses Steuerfeld 12 wird von der Basisstation im Vorwärtslink VL in das Informationspaket 1 eingefügt und bildet eine zusätzliche Sicherungsebene für die weitere Datenkommunikation. Gestrichelt dargestellt ist ferner das dem Steuerfeld 12 unmittelbar sich anschließende Bit 13 des nachfol genden CRC-Sicherungsfeldes 6. Bei Erhalt des Inhalts des Steuerfeld 12 sendet der Transponder ein CRC-Bit, welches von der Basisstation ausgewertet wird. Die Basisstation sendet anschließend das Bit 13 als Quittungssignal zu dem Transponder, welches anzeigt, dass die Basisstation mit dem Inhalt des Steuerfeldes 12 einverstanden ist oder nicht.

Das Steuerfeld 12 kann zusätzlich oder alternativ auch innerhalb des Sicherungsfeldes 6 eingefügt werden (siehe Figur 3(B)).

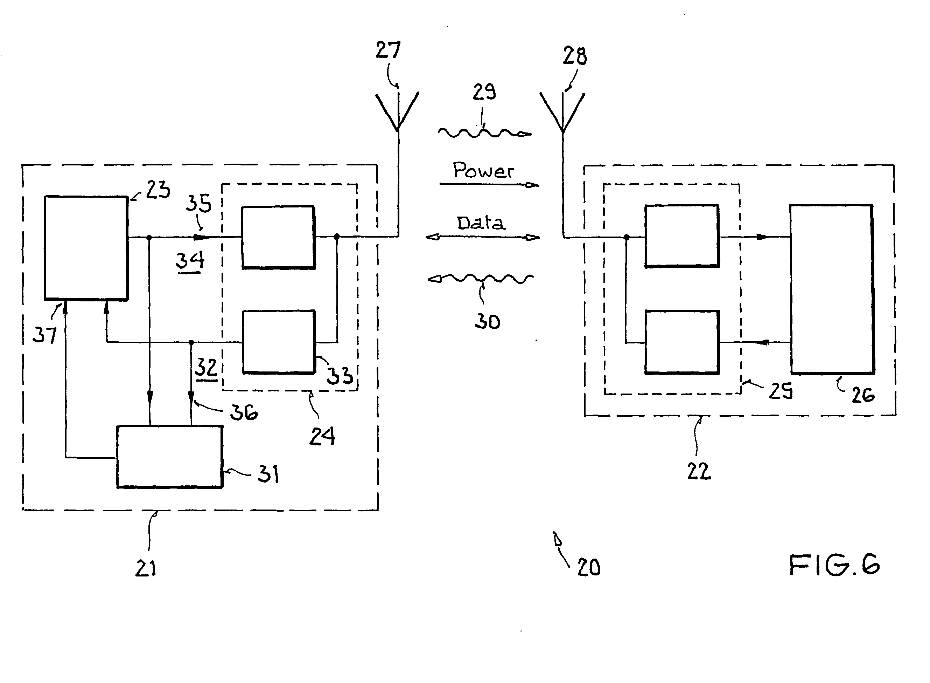

Nachfolgend wird anhand der Figuren 4 und 5 das erfindungsgemäße Verfahren unter Einbeziehung des erfindungsgemäß im Protokoll der Datenübertragung eingefügten Steuerfeldes 12 näher beschrieben.

Das erfindungsgemäße Verfahren basiert auf dem Prinzip, dass die Datenkommunikation zwischen einer Basisstation und einem Transponder zunächst von der Basisstation eingeleitet wird. Hier warten zunächst alle von der Basisstation ansprechbare Transponder darauf, dass diese Basisstation mit der Datenkommunikation beginnt. Der oder die Transponder reagieren darauf erst dann, wenn sie von der Basisstation irgendein gültiges Kommando erhalten haben. Aus diesem Grund beginnt eine Datenkommunikation zwischen Basisstation und Transponder zunächst im Halbduplexbetrieb. Dieses Prinzip wird weithin auch als "Reader talks first"-Prinzip bezeichnet, wobei der Reader hier die Basisstation bezeichnet.

### 1. Verfahrensschritt:

Figur 4(A) zeigt einen ersten Schritt der Datenkommunikation, bei dem die Basisstation zum Zeitpunkt t0 beginnt, ein erstes Informationspaket 1 zu senden. Dabei überträgt die Basisstation beginnend mit dem Zeitpunkt t0 im Vorwärtslink VL zunächst ein vollständiges Informationspaket 1 zum Transponder. Dies dauert bis zum Zeitpunkt t1. Im Anschluss daran, das heißt ab dem Zeitpunkt t1, antwortet der Transponder auf die von der Basis station gesendeten Daten im Vorwärtslink VL mit einem Informationspaket 1, welches über den Rückwärtslink RL zurück übertragen wird. Diese Rückübertragung ist zum Zeitpunkt t2 abgeschlossen. Bei der Rückübertragung der Daten im Rückwärtslink RL werden beispielsweise die von der Basisstation im Vorwärtslink VL angeforderten Daten vom Transponder zurückübertragen.

Im ersten Schritt (siehe Figur 4(A)) der Datenkommunikation erfolgt die Datenübertragung im Vorwärtslink VL und die Rückübertragung dieser Daten im Rückwärtslink RL vollständig getrennt voneinander. Dieses asynchrone Verfahren mit einer zeitlichen Trennung der Abläufe im Vorwärtslink VL und im Rückwärtslink RL wird allgemein auch als Halbduplexverfahren bezeichnet. Der erste Verfahrensschritt im Halbduplexverfahren dient also dem Zweck, die Basisstation und den Transponder und damit deren Datenkommunikation im Vorwärtslink VL und Rückwärtslink RL miteinander zu synchronisieren.

Synchronität ist in der vorliegenden Patentanmeldung stets bezüglich eines von der Basisstation bereitgestellten Taktes, der zum Beispiel aus dem zeitlichen Abstand zweier benachbarter Notches (Spannungseinbrüche) im gesendeten Signal abgeleitet wird, zu verstehen. Daher ist die Datenübertragung im Vorwärtslink VL stets synchron, während die Datenübertragung im Rückwärtslink RL asynchron oder synchron zu dem Takt des gesendeten Signals im Vorwärtslink VL sein kann.

### 2. Verfahrensschritt:

Nachdem der Rückwärtslink RL auf den Vorwärtslink VL einsynchronisiert wurde - dies kann bereits nach jeweils einem Informationspaket 1 im Vorwärtslink VL und Rückwärtslink RL erfolgt sein - , kann die weitere Datenkommunikation zwischen Basisstation und Transponder im so genannten Vollduplexverfahren fortgesetzt werden. Der Transponder schaltet daher vollautomatisch in den Vollduplexbetrieb um.

Bei diesem Vollduplexverfahren sendet die Basisstation zunächst Signale zum Transponder. Der Transponder empfängt diese Daten, wertet sie aus und sendet die von der Basisstation angeforderten Daten wieder zurück. Zusätzlich werden im Vorwärtslink der Datenübertragung die jeweils gesendeten Daten vom Transponder unter Verwendung der allgemein bekannten Rückstreutechnik (backscattering) wieder zu der Basisstation zurückgesendet.

Auf diese Weise ist gewissermaßen eine Vollduplex-Datenübertragung auf Symbol-Ebene realisierbar. Dabei werden im Vollduplex-Betrieb jeweils pro Symbol zwei Informationen übertragen: Zum einen wird von der Basisstation im Vorwärtslink der Wert einer Dateninformation übertragen. Zum anderen wird vom Transponder durch Backscattering eine Steuerinformation (oder auch eine Regelinformation) für diesen Wert dergestalt zurück übertragen, ob der gerade übertragene Wert akzeptiert wurde oder nicht und ob die Datenkommunikation abgebrochen werden soll oder nicht. Die Basisstation ist somit in der Lage die durch Backscattering zurückgesendeten Antwortsignale auszuwerten. Tut sie das nicht - wie dies bei viele preisgünstigen Basisstationen der Fall ist -, stört das die weitere Datenkommunikation nicht.

Im vorliegenden Fall sei Vollduplex- bzw. Halbduplex-Betrieb jeweils im Zeitbereich (engl.: time domain) und nicht im Frequenzbereich (engl.: frequency domain) zu verstehen.

Figur 4(B) zeigt den zweiten Schritt der Datenkommunikation zwischen Basisstation und Transponder, bei der die Datenkommunikation im Vollduplexbetrieb fortgesetzt wird. Es sei hier angenommen, dass die Datenkommunikation zwischen Basisstation und Transponder nunmehr miteinander synchronisiert sind. Die Basisstation sendet fortwährend Daten aus dem Da tenfeld 5 zu dem Transponder. Der Transponder sendet im Backscatterbetrieb Antwortsignale als Antwort auf die empfangenen Datensymbole. Diese Antwortsignale geben Aufschluss darüber, ob der Transponder die gesendeten Daten von der Basisstation ordnungsgemäß empfangen hat oder ob diese fehlerhaft empfangen wurden. Die vom Transponder zurückgesendeten Antwortsignale 14, die in Figur 4(B) lediglich schematisch angedeutet wurden, werden also zu der Basisstation zurück gesendet und können von der Basisstation entsprechend ausgewertet werden. Diese Auswertung kann beispielsweise darin bestehen, dass diese Antwortsignale mit den entsprechend gesendeten Signalen auf Übereinstimmung der darin enthaltenen kodierten Daten verglichen werden. Stimmen diese Daten überein, dann kann auf eine ordnungsgemäße Datenkommunikation von der Basisstation zum Transponder und zurück geschlossen werden. Stimmen diese nicht überein, dann kann der Fehler an verschiedenen Strecken bei der Datenkommunikation aufgetreten sein:
- in der Übertragungsstrecke bei der Übertragung der Daten von der Basisstation zum Transponder;
- in der Übertragungsstrecke bei der Rückübertragung der Antwortsignale vom Transponder zu der Basisstation;
- innerhalb des Transponders beim Empfangen, Demodulieren und/oder Dekodieren der empfangenen Signale sowie bei der entsprechenden Kodierung und Modulation der Antwortsignale im Transponder;
- innerhalb der Basisstation beim Senden der Datensignale;
- innerhalb der Basisstation beim Empfangen, Demodulieren und/oder Dekodieren der entsprechenden Antwortsignale.

Ob und inwieweit die rückübertragenen Antwortsignale innerhalb der Basisstation mit den gesendeten Signalen verglichen wird, hängt zum einen von dem Aufbau und der Funktionsweise der Basisstation und zum anderen von der jeweils gewünschten Applikation ab. Das bedeutet, dass die rücküber tragenen Antwortsignale nicht notwendigerweise innerhalb der Basisstation ausgewertet werden muss. Eine Auswertung unterbleibt zum Beispiel dann, wenn die Basisstation beispielsweise als so genannter "low cost reader" ausgebildet hat und eine derartige Funktionalität gar nicht aufweist. Darüber hinaus ist in vielen Fällen auch eine Auswertung der rückübertragenen Antwortsignale nicht erwünscht, da dies insbesondere im Falle einer Vielzahl von in unmittelbarer Umgebung zur Basisstation befindlichen Transpondern gar nicht möglich ist. Zusätzlich oder alternativ kann auch vorgesehen sein, dass diese Auswertung die Leistungsfähigkeit der Basisstation signifikant herabsetzen würde und daher gar nicht durchgeführt wird.

In einer besonders vorteilhaften Ausgestaltung ist die Basisstation allerdings in der Lage, die Antwortsignale mit den entsprechenden gesendeten Signalen zu vergleichen und daraus Rückschlüsse über die Qualität der Datenkommunikation und damit der Datenübertragungsstrecke zu erhalten. Dieses erfindungsgemäße Auswertung wird nachfolgend noch ausführlich beschrieben.

Erfindungsgemäß fügt die Basisstation nun ein Steuerfeld 12 in die Struktur eines Informationspakets 1 im Vorwärtslink VL ein. Typischerweise weist das Steuerfeld 12 ein einziges EOF-Steuersymbol (EOF = end of file) auf, wenngleich auch eine größere Anzahl an Steuersymbolen denkbar wäre. Mittels des ersten EOF-Steuersymbols innerhalb des Steuerfeldes 12 ist somit eine Umschaltung in eine variable, veränderliche Sicherungsebene möglich. Von der Basisstation werden nach dem ersten EOF-Steuersymbol empfangene Symbole als Quittierungssymbole interpretiert. Werden die Quittierungssymbole ebenfalls als Bestandteil des Steuerfeldes 12 interpretiert, dann weist das Steuersymbol daher zumindest zwei Symbole auf.

Das erste Symbol des Steuerfeldes 12 ist daher stets als EOF-Steuersymbol ausgebildet. Das Steuerfeld 12 wird durch ein weiteres EOF-Steuersymbol abgeschlossen, welches dem Transponder signalisiert, dass dieses Steuerfeld 12 nun beendet ist.

In einer sehr vorteilhaften Ausgestaltung ist in dieses zweite EOF-Steuersymbol, welches das Ende des Steuerfeldes 12 bezeichnet, gleichzeitig das erste EOF-Symbol des EOT-Endabschnitts 4. Diese Konstellation eignet sich insbesondere bei adaptiven Steuer- und/oder Sicherungsfelder 12, 6, deren Länge einstellbar ist. Denkbar wäre allerdings in einer weiteren Ausgestaltung auch, dass die Länge dieses Steuerfeldes 12 fest vorgegeben ist. In diesem Falle muss das Steuerfeld 12 allerdings nicht durch ein zweites EOF-Steuersymbol abgeschlossen werden. Es reicht hier in einer sehr einfachen Ausgestaltung auch aus, wenn lediglich ein einziges EOF-Steuersymbol vorhanden ist, welches den Beginn dieses Steuerfeldes 12 anzeigt.

Der Inhalt des eingefügten Steuerfeldes 12 gibt Aufschluss darüber, ob und an welcher Stelle das dem Datenfeld nachfolgende Sicherungsfeld 6 abgebrochen werden soll. Insbesondere ist damit auf sehr elegante Weise die Länge eines gerade gesendeten Informationspakets 1 beeinflussbar. Dabei kann der Inhalt des eingefügten Steuerfeldes 12 abhängig von der Auswertung des rückgesendeten Antwortsignals mit dem entsprechend gesendeten Signal von der Basisstation gewählt werden. Zusätzlich oder alternativ lässt sich der Inhalt des eingefügten Steuerfeldes 12 auch unabhängig von den rückgesendeten Antwortsignalen einstellen. Dies hängt vornehmlich von der gewünschten Applikation und Konfiguration der Basisstation ab.

Das Steuerfeld 12 kann neben den EOF-Steuersymbol weitere Symbole, beispielsweise eine "0" und eine "1" aufweisen. In diesem Fall weist das Steuerfeld 12 somit drei unterschiedliche Steuersymbole auf, die nachfolgend nur kurz beschrieben werden sollen:
- EOF-Symbol:
   Das erste EOF-Symbol signalisiert dem Transponder, dass die Datenkommunikation eines Informationspaktes beendet werden soll. Die nachfolgenden CRC-Symbole des CRC-Sicherungsfeld 6 - mit Ausnahme von einem Bit als Quittierungssignal - müssen damit nicht mehr übertragen werden bzw. das weitere Durchlaufen der Schleife des CRC-Sicherungsfeld 6 kann abgebrochen werden (siehe Figur 5(C)). Die Datenkommunikation im Vorwärtslinks VL wird durch das Einfügen eines solchen EOF-Symbols 12 sowie durch zurücksenden eines entsprechenden Quittierungssignals beendet. Die weitere Datenkommunikation wird dann durch Senden der angeforderten Daten im Returnlink RL fortgesetzt.
- Wert "0":
   Mit einem niedrigen logischen Pegel ("0") eines CRC-Steuersymbols wird dem Transponder von der Basisstation signalisiert, dass bei dem zuvor gesendeten Symbol eine ordnungsgemäße Datenkommunikation vorhanden war. Die Basisstation ist hier mit der Datenkommunikation einverstanden. Die Datenkommunikation wird nun solange fortgesetzt, wie das von der Basisstation gesendete Steuersymbol eine "0" aufweist. In diesem Fall kann, je nach dem, mit welcher Sicherheit die Datenübertragung erfolgen soll, das CRC-Sicherungsfeld 6 mehrfach übertragen werden. Durch das mehrfache Senden der Symbole des CRC-Sicherungsfeldes 6 kann vorteilhafterweise das Signal-/Rauschverhältnis erhöht werden. Das mehrfache Senden der Symbole des CRC-Sicherungsfeldes 6 wird dann vorgenommen, wenn applikationsbedingt eine hohe Sicherheit bei der Datenkommunikation gefordert ist. Im Anschluss einer solchen ordnungsgemäßen Datenkommunikation wird mit der Übertragung der EOT-Symbole des EOT-Feldes 4 das Ende des jeweiligen Informationspakets 1 signalisiert (siehe Figur 5(A)).
- Symbol "1 ":
   Mit einem hohen logischen Pegel ("1") eines CRC-Steuersymbols wird dem Transponder von der Basisstation signalisiert, dass bei dem zuvor gesendeten Symbol ein Fehler vorliegt. Hier kann zum einen vorgesehen sein, dass die Datenkommunikation zwischen Basisstation und Transponder an dieser Stelle sofort abgebrochen wird und das entsprechende Informationspaket 1 nochmals gesendet wird, um damit eine ordnungsgemäße Datenkommunikation zu gewährleisten (siehe Figur 5(B)). Das zuvor gesendete Kommando soll daher nicht ausgeführt werden.

Allgemein werden also die CRC-Symbole des CRC-Sicherungsfeldes 6 solange durchlaufen, bis diese Datenübertragung durch Einfügen des EOF-Steuersymbols 12 beendet wird oder im Falle eines Fehlers bei der Datenübertragung abgebrochen wird. Das EOF-Symbol 12 kann auch gleich zu Beginn des CRC-Sicherungsfeldes 6 gesendet werden, wenn zum Beispiel die Sicherheit bei der Datenkommunikation keine Rolle spielt. Das Gleiche gilt für den Fall, dass die Basisstation mit allen Datensignalen, die von dem Transponder im Datenfeld zurückübertragen worden einverstanden ist. Auch in diesem Falle kann zum Beispiel auf das CRC-Sicherungsfeld 6 verzichtet werden. In diesem Falle würde vom Transponder noch ein Bit des CRC-Sicherungsfeldes 6 als Antwortsignal bzw. als Quittierung des empfangenen EOF-Symbols ausgesendet werden.

Wesentlich bei dem erfindungsgemäßen Verfahren ist, dass die Sicherungsebene durch das Einfügen des Steuerfeldes 12 nicht verändert wird. Dies bedeutet, dass im Falle eines als CRC-Feld ausgebildeten Sicherungsfeldes 12 die Architektur eines CRC-Generators zu Erzeugung der entsprechenden Sicherungsbits erhalten bleibt. Durch das erfindungsgemäße Einfügen des EOF-Steuersymbols 12 wird dies gewährleistet.

Figur 6 zeigt anhand eines Blockschaltbildes den Aufbau eines RFID-Kommunikationssystems enthaltend eine Basisstation und zumindest einen Transponder zur Durchführung des erfindungsgemäßen Verfahrens.

Das mit Bezugszeichen 20 bezeichnete Kommunikationssystem weist eine Basisstation 21 sowie einen Transponder 22 auf. Basisstation 21 und Transponder 22 stehen dabei in kommunikativer Verbindung zueinander. Das Kommunikationssystem ist als so genanntes Master-Slave-Kommunikationssystem ausgebildet, wobei die Basisstation als Master und der oder die Transponder jeweils als Slave fungieren. Die Basisstation 21 weist eine Steuereinrichtung 23 sowie eine Sende-/Empfangseinrichtung 24 (Trancevier) auf. In gleicher Weise weist der Transponder 22 eine Sende-/Empfangseinrichtung 25 sowie eine Steuereinrichtung 26 auf. Die Sende-/Empfangseinrichtung 24 der Basisstation 21 ist dazu ausgelegt, über die Antenne 27 hochfrequente Trägersignale 29 zu einer Antenne 28 des Transponders 22 zu senden. In gleicher Weise ist die Sende-/Empfangseinrichtung 25 des Transponders 22 dazu ausgelegt, im Vollduplexbetrieb auf die gesendeten Signale 29 hin entsprechende Antwortsignale 30 - die so genannten Quittierungssignale - zurück zu der Basisstation 21 zu senden. Die Steuerung der Datenkommunikation erfolgt jeweils über die Steuereinrichtungen 23 bzw. 26.

Die Datenkommunikation ist ferner so ausgebildet, dass eine bidirektionale Übertragung von Daten zwischen Basisstation 21 und Transponder 22 erfolgt, wobei die beiden Richtungen der Datenübertragung durch den Vorwärtslink VL bzw. den Rückwärtslink RL vorgegeben sind. Hingehend wird der Transponder 22 unidirektional über die Trägersignale 29 mit Energie versorgt.

Zur Durchführung des erfindungsgemäßen Verfahrens weist die Basisstation 21 nun eine Auswerteeinrichtung 31 auf. Die Auswerteeinrichtung 31 ist im Empfangspfad 32 der Basisstation 21 angeordnet und dem Empfänger 33 der Sende-/Empfangseinrichtung 24 nachgeschaltet angeordnet. Die Auswerteeinrichtung 31 ist ferner mit dem Sendepfad 34 der Basisstation 21 verbunden. Ausgangsseitig ist die Auswerteeinrichtung 31 mit einem Steuereingang der Steuereinrichtung 23 verbunden. Der Auswerteeinrichtung 31 werden somit sowohl die zu dem Transponder 23 zu sendenden Signale 35 als auch die vom Transponder 23 rückübertragenden Antwortsignale 36 zugeführt. Der Transponder wertet diese beiden Signale 35, 36 aus. Abhängig von dieser Auswertung bzw. von einem Vergleich der beiden Signale 35, 36 erzeugt die Auswerteeinrichtung 31 ausgangsseitig ein Steuersignal 37, welches der Steuereinrichtung 23 zugeführt wird. Der Steuereinrichtung 23, der neben dem Steuersignal 37 auch die von dem Antwortsignal 30 abgeleiteten Signale 36 zugeführt werden, ist nun in der Lage, bei dem zu sendeten Signal ein entsprechendes EOF-Steuerfeld 12, wie es vorstehend anhand der Figuren 3 - 5 beschrieben wurde, in das Protokoll eines Informationspakets 1 einzufügen. Das entsprechende erfindungsgemäße Verfahren, an welcher Stelle und unter welchen Voraussetzungen dieses Steuerfeld 12 in ein jeweiliges Informationspaket eingefügt wird, wurde bereits vorstehend an diesen Figuren 3 bis 5 detailliert beschrieben.

In Figur 6 wurde der Übersichtlichkeit halber der Aufbau der Basisstation 21 sowie des Transponders 22 bewusst stark vereinfacht dargestellt. Es versteht sich von selbst, dass die für eine Datenkommunikation zwischen Basisstation 21 und Transponder 22 erforderlichen Funktionseinheiten wie Demodulator, Energieversorgung, Synchronisationseinrichtung, Dekodierer und dergleichen selbstverständlich in diesen Einheiten 21, 22 vorhanden sind. Insbesondere sei darauf hingewiesen, dass beispielsweise das aus dem Antwortsignal 30 abgeleitete Signal 36 vor dem Einkoppeln in die Auswerteeinheit 31 bereits bandpassgefiltert, gleichgerichtet und demoduliert vorliegt. Gleiches gilt selbstverständlich für das Signal 34, welches ebenfalls in die Auswerteeinrichtung 31 eingekoppelt wird. Zusätzlich oder alternativ kann die Funktionalität der Bandpassfilterung, Gleichrichtung und Demodulation auch in der Auswerteeinrichtung 31 vorgesehen sein.

Für die Implementierung des erfindungsgemäßen Verfahrens existieren mehrere Ausgestaltungsmöglichkeiten, von denen einige nachfolgend kurz beschrieben werden sollen. Im Wesentlichen beruhen alle nachstehend beschriebenen Verfahren auf den Eigenschaften des Fullduplex-Betriebes. Die Steuerung der Datenkommunikation erfolgt jeweils über den Kopfabschnitt 2 eines Informationspaketes 1. Dabei werden die von der Basisstation zu dem Transponder gesendeten Daten bereits im Vorwärtslink VL durch Backscattering vom Transponder als Antwortsignale wieder zur Basisstation zurückübertragen. Diese Antwortsignale werden dann durch Vergleichen mit den gesendeten Signalen ausgewertet.

### Ersten Verfahren:

Gibt die Basisstation für eine bestimmte Anzahl von Bits lediglich eine Vorzugslage (Nullen) aus, dann wird eine folgende, von dieser Vorzugslage abweichende Dekodierung, das heißt eine oder mehrere Einsen als "Fehler" interpretiert. Diese Interpretation bzw. Auswertung erfolgt in der Auswerteeinrichtung 31. Hat der Transponder hingegen lediglich Nullen empfangen, dann wird die entsprechende Datenkommunikation als gültig und damit fehlerfrei akzeptiert. Sieht der Transponder im Anfangsbereich unterschiedliche Wertigkeiten der gesendeten Datensymbole, so kann hier ein allgemeiner Ansatz - das heißt eine feste Sicherungslänge mit logischer Endprüfung - verwendet werden, um eine Aufwärtskompatibilität des Transponders gegenüber der Basisstation zu gewährleisten.

Der Vorteil dieses ersten Verfahrens besteht vor allem darin, dass in dem CRC-Sicherungsfeld 6 des Protokolls nur kurze Felder enthalten sind sowie gegebenenfalls ein langes Feld, um einen erkannten Fehler entsprechend zu markieren.

Diese Funktion kann auch ausgeblendet werden, zum Beispiel kann der Transponder den Takt für das CRC-Sicherungsfeld 6 auch deaktivieren (engl.: disabled).

### Zweites Verfahren:

Bei diesem zweiten Verfahren sendet die Basisstation nach Abschluss des Datenfeldes 5 ein so genanntes EOF-Steuersymbol als Bestandteil des Steuerfeldes 12. Solche Transponder, die das Einfügen eines solchen EOF-Symbols in das Protokoll des gesendeten Informationspaketes 1 nicht unterstützen, erkennen darin zum Beispiel einen Fehler. Diese Transponder können dazu ausgelegt sein, sich in einen passiven Zustand zurückzuziehen bzw. in einen passiven Zustand versetzt zu werden, da deren Protokoll für die Datenübertragung und damit die gesamte Anzahl der gesendeten Bits (Datenbits und Sicherungsbits) für eine zu erwartende Datensequenz nicht mit Anzahl der empfangenen Bits übereinstimmt. Das gesendete Informationspaket wird also als falsch interpretiert. Solche Transponder, die diese Art der flexiblen Datenkommunikation mit der Möglichkeit eines eingefügten Steuerfeldes unterstützen, würden an dieser Stelle ihrerseits eine aus dem gesendeten EOF-Steuersymbol 12 ermitteltes Prüfsymbol oder eine davon abgeleitete Größe zurück zu der Basisstation zu übertragen. Abhängig von der Dekodierung dieses EOF-Steuersymbols 12 kann die Basisstation diesem Transponder nun signalisieren, ob die Datenkommunikation ordnungsgemäß erfolgt ist oder fehlerbehaftet war. Beispielsweise sendet die Basisstation für das EOF-Steuersymbol 12 ein kurzes Zeichen ("0"), um eine ordnungsgemäße Datenkommunikation anzuzeigen und langes Zeichen ("1 ") um eine fehlerhafte Datenkommunikation zu markieren.

Die Anzahl der Antwortsignale kann vorteilhafterweise auch auf Null gesetzt werden, sofern dies erforderlich oder verlangt wird. Vorzugsweise ist die minimale Anzahl der (zeitversetzt) zurückübertragenen Antwortsignale jedoch größer als Null.

Solche Transponder, die das CRC-Sicherungsfeld 6 zur Taktgewinnung benötigen, können das erfindungsgemäße Verfahren ebenfalls unterstützen, da auch eine größere Anzahl von Sicherungssymbolen übertragen werden kann. Nach dem Empfang der gesendeten CRC-Sicherheitssymbole können vom Transponder normale Taktsignale empfangen werden. Auf diese Weise ist auch eine Aufwärtskompatibilität gegeben.

Der Vorteil dieses Verfahrens liegt in der dezidierten Trennung von Datenfeld 5 und Sicherungsfeld 6 bzw. dem durch das Steuerfeld 12 neu eingebrachten Sicherungsebene. Bei dieser Implementierung sind im Falle einer CRC-Implenmentierung beide Möglichkeiten der Sicherheitsprüfung möglich:
- Das CRC-Register arbeitet weiter als CRC-Register;
- Das CRC-Register arbeitet als Schieberegister und es wird jeweils die letzte Stelle des Schieberegisters ausgegeben. Der Empfänger überprüft dann die eingehenden Antwortsignale Bit für Bit.

### Drittes Verfahren:

Bei diesem dritten Verfahren wird nach Abschluss der Arbitrationsphase die Prüfsumme (Parity, Checksum, CRC) vom Transponder zurückübertragen. Die Basisstation sendet vorzugsweise nur die kurzen Zeichen ("0"). Empfängt der Transponder ein langes Zeichen ("1 "), so verwirft er das positiv während der Arbitration gewonnene Ergebnis und bleibt still.

Hinsichtlich der Steuerung der Datenkommunikation und insbesondere hinsichtlich der Steuerung der Länge eines Informationspaketes 1 wird auf die deutsche Offenlegungsschrift DE 101 38 217 A1 verwiesen. Diese Druckschrift beschreibt einen Steuerungsmechanismus die Datenrate an die Kommunikationsbedingungen und insbesondere an die nationalen HF-Vorschriften anpassbar ist. Mittels dieses in der DE 101 38 217 A1 be schriebenen Verfahren lässt sich damit die Datenrate wesentlich erhöhen. Diese Druckschrift wird insbesondere hinsichtlich des Steuerungsmechanismus über den Kopfabschnitt 2 eines Datenprotokolls, mit welchem die Anzahl der zur Kodierung im Datenbereich verwendeten Symbole und deren Kennung definiert wird, hiermit voll inhaltlich in die vorliegende Patentanmeldung mit einbezogen.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Die Erfindung sei insbesondere nicht ausschließlich auf RFID-Systeme beschränkt, sondern lässt sich selbstverständlich auch erweitern, beispielsweise für die Einzelteilerkennung (engl: item identification). Häufig müssen einzelne Teile nicht eindeutig erkannt werden. Hier reicht es auch meist aus, dass ein Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines fernsteuerbaren Sensors (engl: remote sensor) auf. Die Erfindung betrifft also auch ausdrücklich solche Sensoren, bei denen eine Kommunikation zum Auslesen und Beschreiben von Daten eines Datenträgers bzw. Sensors vorgenommen werden. Als Beispiel für eine solche so genannte ferngesteuerte Sensoranwendung sei auf einen Temperatursensor, einen Drucksensor oder dergleichen verwiesen.

In den Ausführungsbeispielen der Figuren 4 und 5 wurde jeweils angenommen, dass der Inhalt des Steuerfeldes 12 ein einziges Symbole, nämlich EOF, aufweist. Denkbar wäre natürlich auch, dass hierfür zwei oder mehr Symbole für das Steuerfeld vorgesehen sind. Denkbar wäre ferner, wenn statt nur einem Steuerfeld auch mehrere Steuerfelder vorgesehen sind, die an unterschiedlichen Stellen im Informationspaket einfügbar sind. Bei entsprechender Abstimmung dieser Steuerfelder untereinander ließe sich damit eine äußerst flexible Datenkommunikation bereitstellen, die jederzeit flexibel an die jeweiligen Gegebenheiten der Datenkommunikation angepasst werden kann.

Das vorstehend beschriebene Datenkommunikationssystem - und -verfahren wurden anhand des Prinzips "Reader talks first"-Prinzip beschrieben. Denkbar wäre natürlich auch das Prinzip "Tag talks first", bei dem die Basisstation auf eine Anfrage eines Transponder wartet. Allerdings weist dieses Prinzip eine schlechtere Reaktionszeit auf, so dass vor allem bei modernen so genannten "long range" Datenkommunikationssystem das "Reader talks first"-Prinzip eingesetzt wird.

In dem vorstehenden Ausführungsbeispielen bezeichnete jeweils eine logische Null eine ordnungsgemäße Datenkommunikation und eine logische Eins eine fehlerhafte Datenkommunikation. Denkbar wäre hier natürlich auch eine umkehrte Logik.

### Bezugszeichenliste

- 1: Informationspaket
- 2: Kopfabschnitt
- 3: Mittelabschnitt
- 4: Endabschnitt, EOT-Abschnitt
- 5: Datenfeld
- 6: (CRC-)Sicherungsfeld
- 7: Kommandofeld, Befehlsfeld
- 8: Parameterfeld
- 9: Adressfeld
- 10: Programmdatenfeld
- 11: CRC-Sicherungssymbole
- 11 a: Kommandobits
- 11b: Sicherungsbits
- 12: Steuerfeld
- 13: einzelnes Symbol des CRC-Sicherungsfeldes
- 14: rückgestreutes Bit im Rückwärtslink
- 15, 16: EOF-Symbole des Endabschnitts

- 20: Kommunikationssystem
- 21: Basisstation
- 22: Transponder
- 23: Steuereinrichtung
- 24, 25: Sende-/Empfangseinrichtung, Trancevier
- 26: Steuereinrichtung
- 27, 28: (Empfangs-/Sende-)Antenne
- 29: gesendete Trägersignale
- 30: zurückgesendete Antwortsignale
- 31: Auswerteeinrichtung
- 32: Empfangspfad
- 33: Empfänger
- 34: Sendepfad
- 35: Sendesignale
- 36: Empfangssignale, Antwortsignale
- 37: Steuersignale

- VL: Vorwärtslink
- RL: Rückwärtslink
- t0 - t4: Zeitpunkte
- Δt: Dauer eines Informationspakets

## Patentansprüche

1. Verfahren zur Datenkommunikation zwischen einer Basisstation (21) und zumindest einem Transponder (22) mittels eines hochfrequenten elektromagnetischen Trägersignals, auf welchem Informationspakete (1) aufmoduliert sind, wobei jeweils ein Informationspaket (1) einen Kopfabschnitt (2), einen Mittelabschnitt (3) und einen Endabschnitt (4) aufweist und wobei der Mittelabschnitt (3) ein Datenfeld (5) zum Übertragung von Daten und/oder Adressinformationen und ein danach angeordnetes Sicherungsfeld (6) zur Korrektur von Fehlern bei der Übertragung der Daten und/oder Adressinformationen aufweist,
**dadurch gekennzeichnet,**
**dass** von der Basisstation zumindest ein Steuerfeld (12) nach dem Datenfeld (5) eingefügt wird, dessen Inhalt Aufschluss darüber gibt, an welcher Stelle das einem Datenfeld (5) nachfolgende Sicherungsfeld (6) abgebrochen werden soll, und über welches die Länge eines aktuell gesendeten Informationspakets (1) variabel eingestellt wird.

2. Verfahren Anspruch 1,
**dadurch gekennzeichnet,**
**dass** das Steuerfeld unmittelbar nach dem Datenfeld eingefügt wird.

3. Verfahren Anspruch 1,
**dadurch gekennzeichnet,**
**dass** das Steuerfeld nach dem Datenfeld und innerhalb des Sicherungsfeldes eingefügt wird.

4. Verfahren nach einem der vorstehenden Ansprüche,
**dadurch gekennzeichnet,**
**dass** das Steuerfeld im Vorwärtslink einer Datenkommunikation eingefügt wird.

5. Verfahren nach einem der vorstehenden Ansprüche,
**dadurch gekennzeichnet,**
**dass** die Basisstation (21) den Inhalt des Steuerfeldes (12) abhängig von den übertragenen Daten im Datenfeld (5) einstellt und dass der Inhalt des Steuerfeldes (12) vorgibt, an welcher Stelle des Sicherungsfeld (6) das Steuerfeld (12) eingefügt wird.

6. Verfahren nach einem der vorstehenden Ansprüche,
**dadurch gekennzeichnet,**
**dass** die Basisstation auf eine Antwortsignal des Transponders hin zumindest ein Sicherungssymbol im Bereich des Sicherungsfeldes (6) sendet, wobei dem jeweiligen Sicherungssymbol ein erster Wert zugewiesen wird, der dem Transponder anzeigt, dass die Übertragung der jeweiligen Daten ordnungsgemäß erfolgt ist, und dass dem Sicherungssymbol zumindest ein zweites Wert zugewiesen wird, der dem Transponder anzeigt, dass die Übertragung der jeweiligen Daten fehlerhaft war.

7. Verfahren nach Anspruch 6,
**dadurch gekennzeichnet,**
**dass** die Datenkommunikation im Bereich des Sicherungsfeldes (6) fortgesetzt wird, sofern das Steuerfeld (6) den ersten Wert aufweist.

8. Verfahren nach einem der Ansprüche 6 oder 7,
**dadurch gekennzeichnet,**
**dass** die Datenkommunikation im Bereich des Sicherungsfeldes (6) unterbrochen wird und/oder erneut vom am Beginn des Informationspakets (1) begonnen wird, sofern das Steuerfeld (6) den zweiten Wert aufweist.

9. Verfahren nach einem der vorstehenden Ansprüche,
**dadurch gekennzeichnet,**
**dass** das dem Sicherungssymbol ein dritter Wert zugewiesen wird, der dem Transponder anzeigt, dass die nachfolgenden Symbole des Sicherungsfeldes (6) übersprungen werden sollen und/oder die weitere Überprüfung der gesendeten Daten beendet werden soll.

10. Verfahren nach einem der vorstehenden Ansprüche,
**dadurch gekennzeichnet,**
**dass** über das Steuerfeld (6) die Anzahl der übertragenen Symbole im Mittelabschnitt (3) derart gesteuert wird, dass abhängig vom Inhalt des Steuerfeldes (6) eine variable Dauer einer Datenübertragung eines Informationspakets (1) einstellbar ist.

11. Verfahren nach einem der vorstehenden Ansprüche,
**dadurch gekennzeichnet,**
**dass** ein Transponder, dessen Protokoll die Funktion des Steuerfeldes nicht unterstützt und damit dessen Inhalt nicht erkennt, den Inhalt des Steuerfeldes ignoriert.

12. Verfahren nach einem der Ansprüche 1 bis 10,
**dadurch gekennzeichnet,**
**dass** ein Transponder, dessen Protokoll die Funktion des Steuerfeldes nicht unterstützt und damit dessen Inhalt nicht erkennt, an der weiteren Datenkommunikation mit der Basisstation nicht mehr teilnimmt.

13. Verfahren nach einem der vorstehenden Ansprüche,
**dadurch gekennzeichnet,**
**dass** zu Beginn der Datenkommunikation diese im Halbduplex-Verfahren durchgeführt wird, bei der die Basisstation (21) zunächst zumindest ein vollständiges Informationspaket (1) in einer Vorwärtsverbindung (VL) an den Transponder (22) sendet und der Transponder (22) nach dieser Übertragung in einer Rückwärtsverbindung (VL) Antwortsignale zur Basisstation (21) zurück sendet.

14. Verfahren nach Anspruch 13,
**dadurch gekennzeichnet,**
**dass** nach dem Senden zumindest eines vollständigen Informationspakets (1) im Halbduplex-Verfahren die Datenkommunikation im VollduplexVerfahren fortgesetzt wird, bei der der Transponder (22) auf jeweils ein von der Basisstation (21) gesendetes Symbol in der Vorwärtsverbindung (VL) ein entsprechendes Antwortsignal unter Verwendung der Rückstreutechnik zurück sendet.

15. Verfahren nach einem der vorstehenden Ansprüche,
**dadurch gekennzeichnet,**
**dass** der Kopfabschnitt (2) Steuerinformationen zur Steuerung der Datenkommunikation aufweist, wobei über die Steuerinformationen zumindest die Anzahl der zu übertragenden Daten und deren Kennung definiert wird.

16. Verfahren nach einem der vorstehenden Ansprüche,
**dadurch gekennzeichnet,**
**dass** die Symbole im Sicherungsfeld (6) als CRC-Sicherungssymbole und/oder Parity-Bits ausgebildet sind, über die eine ordnungsgemäße Datenkommunikation der Informationen im Datenfeld (5) sichergestellt wird.

17. Verfahren nach einem der vorstehenden Ansprüche,
**dadurch gekennzeichnet,**
**dass** im Datenfeld (5) Kommandos, Parameterdaten, Adressdaten und/oder Programmdaten enthalten sind.

18. Verfahren nach einem der vorstehenden Ansprüche,
**dadurch gekennzeichnet,**
**dass** im Kopfabschnitt (2) Steuersymbole zur Steuerung der Datenübertragung eines jeweils zu sendenden Informationspaket (1) enthalten sind.

19. Verfahren nach Anspruch 18,
**dadurch gekennzeichnet,**
**dass** die Steuersymbole die Bitpositionszeiger für den Beginn des Mittelabschnitts, des Datenfeldes (5), des Sicherungsfeldes (6), des Steuerfeldes (12) und/oder des Endabschnitts (4) des jeweiligen Informationspaket (1) aufweist.

20. Basisstation zur Durchführung eines Verfahrens zur Datenkommunikation mit zumindest einem Transponder nach einem der Ansprüche 1 bis 19,
- mit einer Sende-/Empfangseinrichtung zum Senden hochfrequenter Trägersignale und zum Empfangen entsprechender Antwortsignale eines Transponders,
- mit einer mit der Sende-/Empfangseinrichtung gekoppelten Auswerteeinrichtung, welche die gesendeten und die entsprechend zugehörigen von einem Transponder zurückübertragenen Antwortsignale miteinander vergleicht und auswertet,
- mit einer mit der Auswerteeinrichtung gekoppelten Steuereinrichtung, die abhängig von der Auswertung in der Auswerteeinrichtung die weitere Datenkommunikation mit zumindest einem Transponder steuert, indem sie zumindest ein Steuerfeld (12) im Vorwärtslink eines gesendeten Informationspakets (1) einfügt.

21. Datenkommunikationssystem, insbesondere RFID-Datenkommunikationssystem,
- mit einer Basisstation nach Anspruch 20,
- mit zumindest einem Transponder, der mittels eines Verfahrens zur Datenkommunikation nach einem der Ansprüche 1 bis 19 mit der Basisstation in kommunikativer drahtloser Verbindung steht, der von der Basisstation mit Energie versorgt wird und der im Rückwärtslink im Vollduplexbetrieb zu der Basisstation betreibbar ist

22. Datenkommunikationssystem nach Anspruch 21,
**dadurch gekennzeichnet,**
**dass** der Transponder dazu ausgelegt ist, auf von der Basisstation gesendete Signale hin Antwortsignale an die Basisstation zurück zu senden

23. Datenkommunikationssystem nach wenigstens einem der Ansprüche 21 oder 22,
**dadurch gekennzeichnet,**
**dass** Transponder die Funktion eines fernsteuerbaren Sensors, insbesondere eines Temperatursensors und/oder eines Drucksensors, aufweist.

## Claims

1. Method for data communication between a base station (21) and at least one transponder (22) by means of a high-frequency electromagnetic carrier signal, onto which data packets (1) are modulated, wherein in each instance a data packet (1) comprises a head section (2), a middle section (3) and an end section (4) and wherein the middle section (3) has a data field (5) for transmission of data and/or items of address information and a security field (6), which is arranged thereafter, for correction of errors in the transmission of the data and/or items of address information, **characterised in that** at least one control field (12), the content of which allows a conclusion about the point at which the security field (6) succeeding the data field (5) is to be interrupted and by way of which the length of a currently transmitted data packet (1) is set to be variable, is inserted after the data field (5) by the base station.

2. Method according to claim 1, **characterised in that** the control field is inserted directly after the data field.

3. Method according to claim 1, **characterised in that** the control field is inserted after the data field and within the security field.

4. Method according to one of the preceding claims, **characterised in that** the control field is inserted into the forward link of a data communication.

5. Method according to one of the preceding claims, **characterised in that** the base station (21) sets the content of the control field (12) in dependence on the transmitted data in the data field (12) and that the content of the control field (12) predetermines at which point of the security field (6) the control field (12) is inserted.

6. Method according to one of the preceding claims, **characterised in that** the base station in response to an answer signal of the transponder transmits at least one security symbol in the region of the security field (6), wherein there is allocated to the respective security symbol a first value which indicates to the transponder that the transmission of the respective data has taken place correctly, and that there is allocated to the security symbol at least one second value which indicates to the transponder that the transmission of the respective data was defective.

7. Method according to claim 6, **characterised in that** the data communication is continued in the region of the security field (6) as long as the control field (6) has the first value.

8. Method according to one claims 6 and 7, **characterised in that** the data communication in the region of the security field (6) is interrupted and/or recommenced at the start of the data packet (1) as long as the control field (6) has the second value.

9. Method according to one of the preceding claims, **characterised in that** there is allocated to the security symbol a third value which indicates to the transponder that the succeeding symbols of the security field (6) are to be skipped and/or the further checking of the transmitted data is to be concluded.

10. Method according to one of the preceding claims, **characterised in that** the number of transmitted symbols in the middle section (3) is controlled by way of the control field (6) in such a manner that depending on the content of the control field (6) a variable duration of a data transmission of a data packet (1) is settable.

11. Method according to one of the preceding claims, **characterised in that** a transponder of which the protocol does not support the function of the control field and thus the content of which is not recognised ignores the content of the control field.

12. Method according to one of claims 1 to 10, **characterised in that** a transponder of which the protocol does not support the function of the control field and thus the content of which is not recognised no longer participates in the further data communication with the base station.

13. Method according to one of the preceding claims, **characterised in that** at the beginning of the data communication this is carried out in the half-duplex method in which the base station (21) initially transmits at least one complete data packet (1) in a forward connection (VL) to the transponder (22) and the transponder (22) after this transmission transmits back answer signals to the base station (21) in a return connection (VL).

14. Method according to claim 13, **characterised in that** after the transmission of at least one complete data packet (1) in the half-duplex method the data communication is continued in the full-duplex method in which the transponder (22) in response to each symbol, which is transmitted by the base station (21), in the forward connection (VL) transmits back a corresponding answer signal with use of the backscatter technique.

15. Method according to one of the preceding claims, **characterised in that** the head section (2) has items of control information for controlling the data communication, wherein at least the number of the data to be transmitted and the identification thereof are defined by way of the items of control information.

16. Method according to one of the preceding claims, **characterised in that** the symbols in the security field (6) are formed as CRC security symbols and/or parity bits by way of which a correct data transmission of the items of information in the data field (5) is ensured.

17. Method according to one of the preceding claims, **characterised in that** commands, parameter data, address data and/or program data are contained in the data field (5).

18. Method according to one of the preceding claims, **characterised in that** control symbols for controlling the data transmission of a respective data packet (1) to be transmitted are contained in the head section (2).

19. Method according to claim 18, **characterised in that** the control symbols comprise the bit position pointer for the start of the middle section, of the data field (5), of the security field (6), of the control field (12) and/or of the end section (4) of the respective data packet (1).

20. Base station for carrying out a method for data communication with at least one transponder according to one of claims 1 to 19,
- with a transmitter/receiver device for transmitting high-frequency carrier signals and for receiving corresponding answer signals of a transponder,
- with an evaluating device which is coupled with the transmitter/receiver device and which compares and evaluates the transmitted and corresponding associated answer signals transferred back by a transponder,
- with a control device which is coupled with the evaluating device and which in dependence on the evaluation in the evaluating device controls the further data communication by at least one transponder in that it inserts at least one control field (12) into the forward link of a transmitted data packet (1).

21. Data communications system, particularly RFID data communications system,
- with a base station according to claim 20,
- with at least one transponder, which by means of a method for data communication according to one of claims 1 to 19 is in communicative wire-free connection with the base station, which is supplied by the base station with energy and which is operable in the return link in full-duplex operation to the base station.

22. Data communications system according to claim 21, **characterised in that** the transponder is designed for the purpose of transmitting answer signals back to the base station in response to signals transmitted by the base station.

23. Data communications system according to at least one of claims 21 and 22, **characterised in that** the transponder has the function of a remotely controllable sensor, particularly a temperature sensor and/or a pressure sensor.

## Revendications

1. Procédé de communication de données entre une station de base (21) et au moins un transpondeur (22) au moyen d'un signal porteur électromagnétique à haute fréquence, sur lequel des paquets d'informations (1) sont modulés, chaque paquet d'informations (1) comprenant une section d'en-tête (2), une section intermédiaire (3) et une section finale (4), et la section intermédiaire (3) présentant une zone de données (5) pour la transmission de données et/ou d'informations d'adresses et une zone de sécurité (6) disposée après cette zone pour corriger les erreurs survenues lors de la transmission des données et/ou des informations d'adresses, **caractérisé en ce qu'**au moins une zone de commande (12) provenant de la station de base est insérée après la zone de données (5), dont le contenu révèle l'endroit où la zone de sécurité (6) consécutive à une zone de données (5) doit être interrompue, et par laquelle la longueur d'un paquet d'informations (1) en cours de transmission est établie de manière variable.

2. Procédé selon la revendication 1, **caractérisé en ce que** la zone de commande est insérée immédiatement après la zone de données.

3. Procédé selon la revendication 1, **caractérisé en ce que** la zone de commande est insérée après la zone de données et à l'intérieur de la zone de sécurité.

4. Procédé selon l'une quelconque des revendications précédentes, **caractérisé en ce que** la zone de commande est insérée dans la liaison en sens direct d'une communication de données.

5. Procédé selon l'une quelconque des revendications précédentes, **caractérisé en ce que** la station de base (21) établie le contenu de la zone de commande (12) en fonction des données transmises dans la zone de données (5) et **en ce que** le contenu de la zone de commande (12) spécifie l'endroit de la zone de sécurité (6) où l'on insère la zone de commande (12).

6. Procédé selon l'une quelconque des revendications précédentes, **caractérisé en ce que** la station de base envoie au moins un symbole de sécurité dans la région de la zone de sécurité (6), chaque symbole de sécurité se voyant affecter une première valeur, qui indique au transpondeur que la transmission des données respectives a été effectuée de manière conforme, et **en ce que** l'on affecte au symbole de sécurité une deuxième valeur, qui indique au transpondeur que la transmission des données respectives a été défectueuse.

7. Procédé selon la revendication 6, **caractérisé en ce que** la communication de données dans la région de la zone de sécurité (6) est poursuivie tant que la zone de commande (6) présente la première valeur.

8. Procédé selon l'une des revendications 6 ou 7, **caractérisé en ce que** la communication de données dans la région de la zone de sécurité (6) est interrompue et/ou recommencée à partir du début du paquet d'informations (1) tant que la zone de commande (6) présente la deuxième valeur.

9. Procédé selon l'une quelconque des revendications précédentes, **caractérisé en ce que** l'on affecte au symbole de sécurité une troisième valeur, qui indique au transpondeur que les symboles suivants de la zone de sécurité (6) doivent être ignorés et/ou la vérification ultérieure des données envoyées doit être arrêtée.

10. Procédé selon l'une quelconque des revendications précédentes, **caractérisé en ce que** le nombre de symboles transmis est commandé de telle manière dans la zone médiane (3) par la zone de commande (6) qu'on peut régler une durée variable d'une transmission de données d'un paquet d'informations (1) en fonction du contenu de la zone de commande (6).

11. Procédé selon l'une quelconque des revendications précédentes, **caractérisé en ce qu'**un transpondeur dont le protocole ne comporte pas la fonction de la zone de commande et par conséquent ne reconnaît pas son contenu, ignore le contenu de la zone de commande.

12. Procédé selon l'une quelconque des revendications 1 à 10, **caractérisé en ce qu'**un transpondeur, dont le protocole ne comporte pas la fonction de la zone de commande, et par conséquent ne reconnaît pas son contenu, ne participe plus à la communication ultérieure de données avec la station de base.

13. Procédé selon l'une quelconque des revendications précédentes, **caractérisé en ce qu'**au début de la communication de données, celle-ci est réalisée selon le procédé en semi-duplex, dans lequel la station de base (21) envoie au transpondeur (22) d'abord au moins une paquet d'informations (1) complet dans une liaison en sens direct (VL), et dans lequel après cette transmission, le transpondeur (22) renvoie des signaux de réponse à la station de base (21) dans une liaison en sens inverse (RL).

14. Procédé selon la revendication 13, **caractérisé en ce qu'**après la transmission d'au moins un paquet d'informations (1) complet selon le procédé en semi-duplex, on continue la communication de données en duplex, procédé dans lequel le transpondeur (22) renvoie en réponse à un symbole provenant de la station de base (21) dans la liaison en sens direct (VL) à chaque fois un signal réponse correspondant en utilisant la rétrodiffusion.

15. Procédé selon l'une quelconque des revendications précédentes, **caractérisé en ce que** l'entête (2) présente des informations de commande pour commander la communication de données, dans lequel on définit au moins le nombre de données à transmettre et leur identification par l'intermédiaire des informations de commande.

16. Procédé selon l'une quelconque des revendications précédentes, **caractérisé en ce que** dans la zone de sécurité (6) les symboles sont réalisés sous la forme de symboles de sécurité CRC et/ou de bits de parité, par l'intermédiaire desquels on garantit une communication de données conforme des informations dans la zone de données (5).

17. Procédé selon l'une quelconque des revendications précédentes, **caractérisé en ce que** la zone de données (5) contient des ordres, des données de paramètres, des données d'adresses et/ou des données de programmes.

18. Procédé selon l'une quelconque des revendications précédentes, **caractérisé en ce que** l'entête (2) contient des symboles de commande pour commander la transmission de données de chaque paquet d'informations (1) à envoyer.

19. Procédé selon la revendication 18, **caractérisé en ce que** les symboles de commande présentent les indicateurs de position de bit pour le début de la section intermédiaire, de la zone de données (5) de la zone de sécurité (6) de la zone de commande (12) et/ou de la section finale (4) de chaque paquet d'informations (1).

20. Station de base pour réaliser un procédé de communication de données présentant au moins un transpondeur selon l'une quelconque des revendications de 1 à 19, comprenant
. un dispositif d'émission/réception pour la transmission de signaux porteurs à haute fréquence et pour la réception de signaux de réponse correspondants,
. un dispositif d'analyse couplé au dispositif d'émission/réception, qui compare entre eux et analyse les signaux envoyés et les signaux en réponse correspondants renvoyés par un transpondeur,
. un dispositif de commande couplé au dispositif d'analyse, qui commande la communication de données ultérieures avec au moins un transpondeur en fonction de l'analyse dans le dispositif d'analyse, en insérant au moins une zone de commande (12) dans la liaison en sens direct d'un paquet d'informations (1) transmis.

21. Système de communication de données, en particulier système de communication de données d'identification par radio-fréquences RFID, comprenant
. une station de base selon la revendication 20,
. au moins un transpondeur, en liaison communicative sans fil avec la station de base en utilisant un procédé de communication de données selon l'une quelconque des revendications de 1 à 19, alimenté en énergie par la station de base et qui, dans la liaison en sens inverse, peut être exploité en fonctionnement en duplex.

22. Système de communication de données selon la revendication 21, **caractérisé en ce que** le transpondeur est conçu de manière à renvoyer des signaux de réponse à la station de base en réponse à des signaux émis par la station de base.

23. Système de communication de données selon l'une au moins des revendications 21 ou 22, **caractérisé en ce que** le transpondeur présente la fonction d'un capteur commandable à distance, plus particulièrement d'un capteur de température et/ou d'un capteur de pression.
